# EUROPEAN PATENT APPLICATION

(11) **EP 4 645 630 A1**
(43) Date of publication of application: **05.11.2025**
(21) Application number: 22969903.8
(22) Date of filing: 30.12.2022
(51) Int. Cl.: H02J 7/00

(54) **CHARGING CONTROL METHOD, APPARATUS AND SYSTEM, AND VEHICLE**

(71) Applicant: Shenzhen Yinwang Intelligent Technologies Co., Ltd., Shenzhen, Guangdong 518110 (CN)
(72) Inventor: XU, Hang, Shenzhen, Guangdong 518129 (CN); JIAO, Xueping, Shenzhen, Guangdong 518129 (CN); CHEN, Bing, Shenzhen, Guangdong 518129 (CN)
(74) Representative: Gill Jennings & Every LLP
(86) International application number: PCT/CN2022/144379
(87) International publication number: WO 2024/138763

(57) **Abstract**

A charging control method, apparatus, and system, and a vehicle are provided. The charging control method includes: obtaining first status data of a first battery, where the first status data includes a voltage of the first battery; determining a detection result of a state of charge of the first battery based on second status data, where the second status data includes historical status data; when the detection result of the state of charge indicates that the state of charge is detected to be inaccurate, determining a charging status of the first battery based on the voltage of the first battery and a load connected to the first battery; and when it is determined that the charging status of the first battery is to-be-charged, controlling a second battery to charge the first battery.

## Description

### TECHNICAL FIELD

This application relates to the field of mechanical and electronic technologies, and in particular, to a charging control method, apparatus, and system, and a vehicle.

### BACKGROUND

With rapid development of vehicle technologies, functional loads of a vehicle are on the increase, and the functional loads and most control devices are powered by a low-voltage battery in the vehicle. The low-voltage battery has a limited capability of storing electric energy. When the electric energy of the low-voltage battery is insufficient, the low-voltage battery can only stop supplying power to some loads. This affects running of the vehicle.

To ensure that the electric energy stored in the low-voltage battery in the vehicle can meet a power supply requirement of a low-voltage load of the vehicle, the low-voltage battery needs to be regularly charged. Currently, in an existing low-voltage battery charging manner, a fixed charging voltage threshold or a fixed charging capacity threshold is usually set. When a voltage between two ends of the low-voltage battery is less than the charging voltage threshold, or a state of charge (state of charge, SOC) of the low-voltage battery is less than the charging capacity threshold, a high-voltage battery in the vehicle is controlled to charge the low-voltage battery, to supplement the electric energy stored in the low-voltage battery. This low-voltage battery charging manner is mainly implemented by detecting whether a voltage or a state of charge of the low-voltage battery exceeds a specified charging threshold, and can meet a charging requirement in only a specific scenario. When an application scenario of the vehicle changes, the charging manner with the fixed charging threshold may cause an insufficient voltage of the low-voltage battery or frequent charging of the low-voltage battery. This affects normal running of the vehicle in a severe case.

### SUMMARY

This application provides a charging control method, apparatus, and system, and a vehicle, to avoid an insufficient voltage or frequent charging of a low-voltage battery and ensure that electric energy of the low-voltage battery can meet a power supply requirement of the vehicle.

According to a first aspect, an embodiment of this application provides a charging control method. The method may be applied to an electric device and performed by a controller in the electric device, and specifically includes the following steps: obtaining first status data of a first battery, where the first status data includes a voltage of the first battery; determining a detection result of a state of charge of the first battery based on second status data, where the second status data includes historical status data; when the detection result of the state of charge indicates that the state of charge is detected to be inaccurate, determining a charging status of the first battery based on the voltage of the first battery and a load connected to the first battery; and when it is determined that the first battery needs to be charged, controlling a second battery to charge the first battery.

According to the method, the historical status data of the first battery may be used to determine whether the detected state of charge of the first battery is accurate. When it is determined that a value of the state of charge is inaccurate, charging determining may be performed on the first battery based on the voltage of the first battery and a load that affects a voltage amplitude of the first battery. This can meet a charging requirement of the first battery in a scenario in which the state of charge is detected to be inaccurate, a load powered by the first battery changes, or the like.

In a possible implementation, determining the charging status of the first battery based on the voltage of the first battery and the load connected to the first battery includes: detecting a status of the electric device, where the status of the electric device includes a sleep state or a wake-up state; and when it is determined that the electric device is in the sleep state, determining the charging status of the first battery based on the voltage of the first battery and a first preset voltage threshold, where the first preset voltage threshold is a voltage drop generated by a load that runs when the electric device is in the sleep state; or when it is determined that the electric device is in the wake-up state, determining the charging status of the first battery based on the voltage of the first battery and a second preset voltage threshold, where the second preset voltage threshold is a voltage drop generated by a load that runs when the electric device is in the wake-up state.

According to the method, when the electric device is in the sleep state and the wake-up state, quantities of loads powered by the first battery are different, and voltage amplitude decreasing speeds of the first battery are also different. Therefore, loads powered by the first battery may be distinguished based on the status of the electric device, and different preset voltage thresholds may be set as charging determining conditions, to meet charging requirements of the first battery under different powered loads.

In a possible implementation, determining the charging status of the first battery based on the voltage of the first voltage and the load connected to the first battery includes: when it is determined that the electric device is in the sleep state and the voltage of the first battery is less than the first preset voltage threshold, controlling the electric device to enter the wake-up state, and determining that the charging status is to-be-charged; or when it is determined that the electric device is in the wake-up state and the voltage of the first battery is less than the second preset voltage threshold, determining that the charging status is to-be-charged.

According to the method, loads powered by the first battery may be distinguished based on the status of the electric device, different preset voltage thresholds may be set for different loads as charging determining conditions, and charging is performed when the voltage amplitude of the first battery is less than a specified preset voltage amplitude, to meet charging requirements of the first battery in scenarios with different loads.

In a possible implementation, the method further includes: when the detection result of the state of charge indicates that the state of charge is detected to be accurate, determining the charging status of the first battery based on the state of charge and an aging degree of the first battery, where the aging degree indicates a capability of the first battery to store electric energy.

According to the method, when it is determined that the detected state of charge of the first battery is accurate, the state of charge of the first battery is used as a charging detection condition. With use of the first battery, the aging degree of the first battery is gradually severe, and a maximum value of a state of charge of the first battery is gradually decreased. To avoid frequent charging of the first battery, the aging degree of the first battery may be used as a charging determining condition, to reduce a charging loss of the electric device.

In a possible implementation, determining the charging status of the first battery based on the state of charge and the aging degree of the first battery includes: determining, based on the aging degree of the first battery, a preset capacity threshold corresponding to the aging degree of the first battery; and when the state of charge of the first battery is less than the preset capacity threshold, determining that the charging status is to-be-charged.

According to the method, each aging degree corresponds to one maximum state of charge of the first battery. To avoid frequent charging of the first battery due to a decrease in a maximum state of charge of the first battery caused by a severe aging degree, the preset capacity threshold may be configured for the aging degree as a charging condition, to meet a charging requirement of the first battery in a scenario in which the aging degree changes.

In a possible implementation, the method further includes: when the detection result of the state of charge indicates that the state of charge is detected to be accurate, determining the charging status of the first battery based on an aging degree of the first battery, the state of charge, and the voltage of the first battery.

According to the method, in a charging detection process of the first battery, the first battery continuously supplies power to a load, and the state of charge of the first battery is decreased accordingly. As a result, there is a difference between the state of charge in the first status data and an actual state of charge of the first battery caused by a detection delay. The voltage amplitude of the first battery may be used as delay compensation, to ensure accuracy of a detection result.

In a possible implementation, determining the charging status of the first battery based on the aging degree of the first battery, the state of charge, and the voltage of the first battery includes: determining, based on the aging degree of the first battery, a preset capacity threshold corresponding to the aging degree of the first battery; and if the electric device is in a sleep state, when it is detected that the state of charge is less than the preset capacity threshold and the voltage of the first battery is less than a third preset voltage threshold, determining that the charging status is to-be-charged, where the third preset voltage threshold is a voltage drop generated by a load that runs when the electric device is in the sleep state; or if the electric device is in a wake-up state, when it is detected that the state of charge is less than the preset capacity threshold and the voltage of the first battery is less than a fourth preset voltage threshold, determining that the charging status is to-be-charged, where the fourth preset voltage threshold is a voltage drop generated by a load that runs when the electric device is in the wake-up state.

According to the method, when the voltage of the first battery is used as delay compensation, because the voltage amplitude of the first battery is related to a load powered by the first battery and quantities of loads powered by the first battery are different when the electric device is in the sleep state and the wake-up state, specific delay compensation may be performed with reference to the status of the electric device.

In a possible implementation, determining the detection result of the state of charge of the first battery based on the second status data includes: obtaining a first state of charge, a second state of charge, and a charging amount in the second status data, where the first state of charge is a state of charge of the first battery before a last charge, and the second state of charge is a state of charge of the first battery after the last charge; and when a difference between a sum of the first state of charge and the charging amount and the second state of charge is less than or equal to a preset threshold, determining that the detection result of the state of charge indicates that the state of charge is detected to be accurate; or when the difference between the sum of the first state of charge and the charging amount and the second state of charge is greater than the preset threshold, determining that the detection result of the state of charge indicates that the state of charge is detected to be inaccurate.

According to the method, the state of charge of the first battery before the last charge and the state of charge of the first battery after the last charge are compared with an actual charging capacity. When it is detected that a difference is greater than a preset threshold of an allowed error, it indicates that there is a difference between the detected state of charge of the first battery and an actual state of charge, and the detected state of charge cannot be used as a charging detection condition.

In a possible implementation, controlling the second battery to charge the first battery includes: sending a charging request to a controller, where the charging request indicates the controller to control the second battery to charge the first battery.

In a possible implementation, controlling the second battery to charge the first battery includes: sending a first signal to a battery management system in the electric device, where the first signal indicates the battery management system to control the second battery to charge the first battery.

According to a second aspect, an embodiment of this application provides a charging control apparatus. The charging control apparatus includes at least one processor, the at least one processor is coupled to at least one memory, and the at least one processor includes an obtaining unit and a processing unit. The obtaining unit is configured to obtain first status data of a first battery, where the first status data includes a voltage of the first battery. The processing unit is configured to: determine a detection result of a state of charge of the first battery based on second status data, where the second status data includes historical status data; when the detection result of the state of charge indicates that the state of charge is detected to be inaccurate, determine a charging status of the first battery based on the voltage of the first battery and a load connected to the first battery; and when it is determined that the charging status of the first battery is to-be-charged, control a second battery to charge the first battery.

In a possible implementation, the processing unit is specifically configured to: detect a status of an electric device, where the status of the electric device includes a sleep state or a wake-up state; and when it is determined that the electric device is in the sleep state, determine the charging status of the first battery based on the voltage of the first battery and a first preset voltage threshold, where the first preset voltage threshold is a voltage drop generated by a load that runs when the electric device is in the sleep state; or when it is determined that the electric device is in the wake-up state, determine the charging status of the first battery based on the voltage of the first battery and a second preset voltage threshold, where the second preset voltage threshold is a voltage drop generated by a load that runs when the electric device is in the wake-up state.

In a possible implementation, the processing unit is specifically configured to: when it is determined that the electric device is in the sleep state and the voltage of the first battery is less than the first preset voltage threshold, control the electric device to enter the wake-up state, and determine that the charging status is to-be-charged; or when it is determined that the electric device is in the wake-up state and the voltage of the first battery is less than the second preset voltage threshold, determine that the charging status is to-be-charged.

In a possible implementation, the processing unit is further configured to: when the detection result of the state of charge indicates that the state of charge is detected to be accurate, determine the charging status of the first battery based on the state of charge and an aging degree of the first battery, where the aging degree indicates a capability of the first battery to store electric energy.

In a possible implementation, the processing unit is specifically configured to: determine, based on the aging degree of the first battery, a preset capacity threshold corresponding to the aging degree of the first battery; and when the state of charge of the first battery is less than the preset capacity threshold, determine that the charging status is to-be-charged.

In a possible implementation, the processing unit is further configured to: when the detection result of the state of charge indicates that the state of charge is detected to be accurate, determine the charging status of the first battery based on an aging degree of the first battery, the state of charge, and the voltage of the first battery.

In a possible implementation, the processing unit is specifically configured to: determine, based on the aging degree of the first battery, a preset capacity threshold corresponding to the aging degree of the first battery; and if the electric device is in a sleep state, when it is detected that the state of charge is less than the preset capacity threshold and the voltage of the first battery is less than a third preset voltage threshold, determine that the charging status is to-be-charged, where the third preset voltage threshold is a voltage drop generated by a load that runs when the electric device is in the sleep state; or if the electric device is in a wake-up state, when it is detected that the state of charge is less than the preset capacity threshold and the voltage of the first battery is less than a fourth preset voltage threshold, determine that the charging status is to-be-charged, where the fourth preset voltage threshold is a voltage drop generated by a load that runs when the electric device is in the wake-up state.

In a possible implementation, the processing unit is specifically configured to: obtain a first state of charge, a second state of charge, and a charging amount in the second status data, where the first state of charge is a state of charge of the first battery before a last charge, and the second state of charge is a state of charge of the first battery after the last charge; and when a difference between a sum of the first state of charge and the charging amount and the second state of charge is less than or equal to a preset threshold, determine that the detection result of the state of charge indicates that the state of charge is detected to be accurate; or when the difference between the sum of the first state of charge and the charging amount and the second state of charge is greater than the preset threshold, determine that the detection result of the state of charge indicates that the state of charge is detected to be inaccurate.

In a possible implementation, the processing unit is specifically configured to send a charging request to a controller, where the charging request indicates the controller to control the second battery to charge the first battery.

In a possible implementation, the processing unit is specifically configured to send a first signal to a battery management system in the electric device, where the first signal indicates the battery management system to control the second battery to charge the first battery.

According to a third aspect, an embodiment of this application provides a charging control system. The charging control system includes a first battery and a controller, and the first controller is configured to perform the method according to the first aspect and any possible design of the first aspect.

According to a fourth aspect, an embodiment of this application provides a vehicle. The vehicle includes a first battery and the charging control apparatus according to the second aspect and any possible design of the second aspect.

According to a fifth aspect, an embodiment of this application provides a computer-readable storage medium. The storage medium includes a computer program or instructions. When a computer reads and executes the computer program or the instructions, the computer is enabled to perform the method according to the first aspect and any possible design of the first aspect.

According to a sixth aspect, an embodiment of this application provides a computer storage product. When the computer program product runs on a computer, the computer is enabled to perform the method according to the first aspect and any possible design of the first aspect.

For beneficial effects of the second aspect to the sixth aspect, specifically refer to technical effects that can be achieved by corresponding designs in the first aspect. Details are not described herein again.

### BRIEF DESCRIPTION OF DRAWINGS

FIG. 1 is a diagram 1 of a structure of a vehicle according to an embodiment of this application;
FIG. 2 is a diagram of electric energy in a low-voltage battery charging process according to an embodiment of this application;
FIG. 3 is a schematic flowchart 1 of a charging control method according to an embodiment of this application;
FIG. 4 is a schematic flowchart 2 of a charging control method according to an embodiment of this application;
FIG. 5 is a schematic flowchart 3 of a charging control method according to an embodiment of this application;
FIG. 6A and FIG. 6B are a schematic flowchart 4 of a charging control method according to an embodiment of this application;
FIG. 7A and FIG. 7B are a schematic flowchart 5 of a charging control method according to an embodiment of this application;
FIG. 8 is a diagram 1 of a structure of a charging control apparatus according to an embodiment of this application; and
FIG. 9 is a diagram 2 of a structure of a charging control apparatus according to an embodiment of this application.

### DESCRIPTION OF EMBODIMENTS

To make objectives, technical solutions, and advantages of embodiments of this application clearer, the following describes embodiments of this application in detail with reference to accompanying drawings. Terms used in implementations of this application are merely intended to explain specific embodiments of this application, but are not intended to limit this application. It is clear that the described embodiments are merely some but not all of embodiments of this application. All other embodiments obtained by a person of ordinary skill in the art based on embodiments of this application without creative efforts shall fall within the protection scope of this application.

It should be noted that, in the specification, claims, and accompanying drawings of this application, the terms "first", "second", and the like are intended to distinguish between similar objects but do not necessarily indicate a specific order or sequence. It should be understood that data used in such a way is interchangeable in proper circumstances so that embodiments of this application described herein can be implemented in an order other than the order illustrated or described herein. Implementations described in the following example embodiments do not represent all implementations consistent with this application. On the contrary, the implementations are merely examples of apparatuses and methods that are described in the appended claims in detail and that are consistent with some aspects of this application.

The following describes some terms in embodiments of this application, to facilitate understanding of a person skilled in the art.
(1) In embodiments of this application, the term "a plurality of' means two or more, and another quantifier is similar to this.
(2) A switching transistor in embodiments of this application may be one or more of a plurality of types of switching transistors, such as a relay, a metal-oxide-semiconductor field-effect transistor (metal-oxide-semiconductor field-effect transistor, MOSFET), a bipolar junction transistor (bipolar junction transistor, BJT), an insulated gate bipolar transistor (insulated gate bipolar transistor, IGBT), and a silicon carbide (SiC) transistor. Examples are not enumerated in embodiments of this application. Switching transistors may be packaged in a single-transistor package, or may be packaged in a multi-transistor package. This is not limited in embodiments of this application. Each switching transistor may include a first end, a second end, and a control end, and the control end is configured to control conduction or cut-off of the switching transistor. When the switching transistor is conducted, a current may be transmitted between the first end and the second end of the switching transistor. When the switching transistor is cut off, a current cannot be transmitted between the first end and the second end of the switching transistor. The MOSFET is used as an example. The control end of the switching transistor is a gate, and the first end of the switching transistor may be a source, and the second end may be a drain; or the first end may be a drain, and the second end may be a source.
(3) In embodiments of this application, "connection" may be understood as electrical connection, and connection between two electrical elements may be direct or indirect connection between the two electrical elements. For example, that A is connected to B may be that A is directly connected to B, or may be that A is indirectly connected to B through one or more other electrical elements. For example, that A is connected to B may alternatively be that A is directly connected to C, C is directly connected to B, A and B are connected through C. "Connection" in embodiments of this application may alternatively be understood as wireless connection. To be specific, connection between two electrical elements may be electromagnetic connection between the two electrical elements.
(4) Direct current and alternating current: A direct current in embodiments of this application refers to an electrical form in which electric energy is conducted in a constant direction in a circuit. A conduction direction of the electric energy is also referred to as a phase, and the phase of the direct current may be positive or negative. Electric energy intensity of most direct currents is fixed. In some special direct currents (such as pulse direct currents), electric energy intensity changes over time. Electric energy intensity is also referred to as a current amplitude. Common direct current power supplies include a dry battery, a battery, a direct current generator, or the like. An alternating current in embodiments of this application refers to an electrical form in which electric energy is conducted in a direction that changes periodically in a circuit. Electric energy intensity of most alternating currents also changes periodically over time. A periodic change of the alternating current in a conduction direction is defined by a frequency of the alternating current. When the frequency of the alternating current is higher, the alternating current can change the conduction direction faster. When the frequency of the alternating current is lower, the alternating current can change the conduction direction slowly. Common alternating current power supplies include mains, industrial and agricultural power supplies, residential power supplies, or the like.

The following clearly and completely describes the technical solutions in embodiments of this application with reference to the accompanying drawings in embodiments of this application. The solutions provided in embodiments of this application are applied to an electric device in which a first battery and a second battery are disposed. Both the first battery and the second battery are secondary batteries, and a rated voltage of the first battery is less than a rated battery of the second battery. The electric device includes but is not limited to a transportation tool, a robot, an industrial device, a smart factory device, and the like. A transportation tool provided in embodiments of this application may include one or more different types of transport tools or movable objects that operate or move on land (for example, a highway, a road, or a railway), on water (for example, a waterway, a river, or an ocean), or in the space. For example, the transportation tool may include a vehicle, a bicycle, a motorcycle, a train, a subway, an airplane, a ship, an aircraft, another type of transport tool or movable object, or the like.

An example in which the transportation tool is a vehicle is used below. The vehicle provided in embodiments of this application may be a new energy vehicle. The new energy vehicle includes but is not limited to a pure electric vehicle/battery electric vehicle (pure electric vehicle/battery electric vehicle, pure EV/battery EV), a hybrid electric vehicle (hybrid electric vehicle, HEV), a range-extended electric vehicle (range-extended electric vehicle, REEV), a plug-in hybrid electric vehicle (plug-in hybrid electric vehicle, PHEV), another new energy vehicle (new energy vehicle, NEV), or the like.

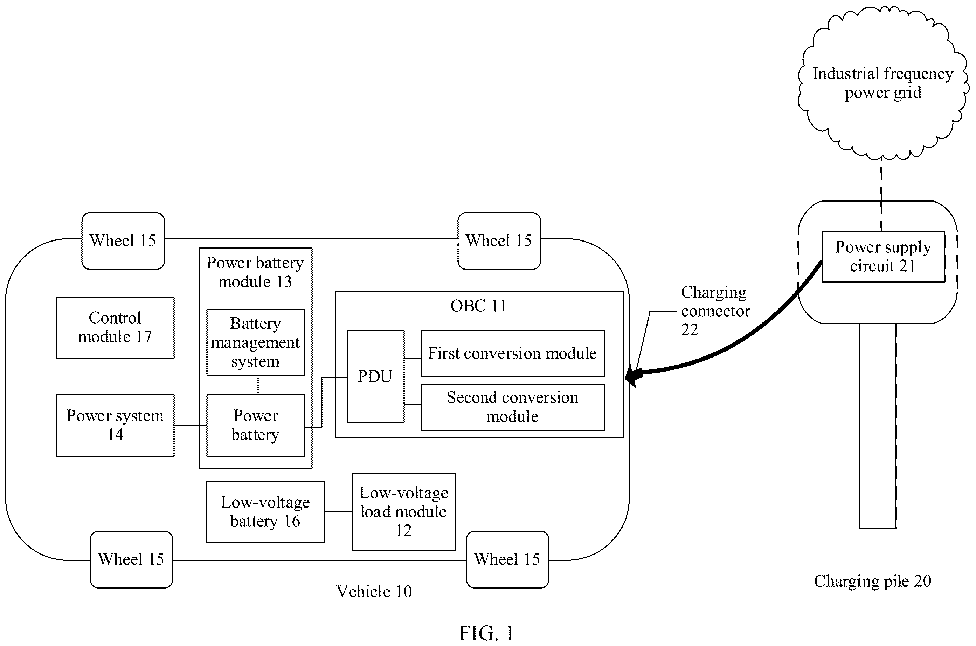

FIG. 1 is a diagram of an example of a structure of a vehicle. With reference to FIG. 1, a vehicle 10 mainly includes an on-board charger (on-board charger, OBC) 11, at least one low-voltage load module 12, a power battery module 13, a power system 14, a wheel 15, a low-voltage battery 16, and a control module 17.

It should be understood that the structure of the vehicle 10 shown in FIG. 1 is merely an example, and the vehicle 10 may have more or fewer components than those shown in FIG. 1, may combine two or more components, or may have a different component configuration. Various components shown in FIG. 1 may be implemented in hardware including one or more signal processing and/or application-specific integrated circuits, software, or a combination of hardware and software.

The power battery module 13 may include a power battery and a battery management system (battery management system, BMS). The BMS may manage charging and discharging of the power battery. The BMS may further include a battery detection unit that can monitor running of the power battery. The power battery may also be referred to as a high-voltage battery, and is a battery with a large capacity and high power.

The power battery may be a secondary battery. The secondary battery includes but is not limited to a lithium ion battery, a sodium ion battery, a potassium ion battery, a magnesium ion battery, a calcium ion battery, an air battery, a lead-acid battery, a nickel-cadmium battery, a super capacitor, and the like. A specific type of the secondary battery is not limited in this application, provided that the secondary battery is a device that can implement a charging and discharging function.

The power system 14 may generally include a gear, a bearing, a differential, one or more types of motors, and the like. When the vehicle 10 travels, the power battery may supply power to the power system 14. The motor in the power system 14 converts received electric energy into mechanical energy, and drives, through the gear, the bearing, and the differential, the wheel 15 of the vehicle 10 to rotate, to implement movement of the vehicle 10.

The low-voltage load module 12 may be a functional load or another type of load inside the vehicle 10, and a rated voltage of the low-voltage load module 12 is far less than a rated voltage of the power battery. Low-voltage load modules 12 may include but are not limited to a control system, an autonomous driving system, a vehicle-mounted navigator, a vehicle-mounted radio, and the like.

When the vehicle 10 is charged, the vehicle 10 may be generally charged by using a charging pile 20. Similar to a relationship between a gas station and a conventional vehicle, a charging pile can "fuel" a new energy vehicle, that is, charge the vehicle. Still refer to FIG. 1. The charging pile 20 mainly includes a power supply circuit 21 and a charging connector 23. An input end of the power supply circuit 21 may receive an alternating current provided by an industrial frequency power grid, and an output end of the power supply circuit 21 is connected to the charging connector 22 through a cable. Generally, when the charging connector 22 is inserted into a charging port of the vehicle 10, the power supply circuit 21 may convert the received alternating current into charging electric energy that adapts to the vehicle 10. The charging electric energy obtained after conversion by the power supply circuit 21 may be input to the OBC 11 through the charging connector 22. For example, the power supply circuit 21 may output alternating current electric energy or direct current electric energy through the charging connector 22.

The OBC 11 provides a part of the received charging electric energy to the power battery, and the power battery further stores the part of electric energy. In some scenarios, the OBC 11 may further provide another part of the received charging electric energy to the low-voltage battery 16, and the low-voltage battery 16 is a secondary battery. The low-voltage battery 16 may store the part of electric energy, and the low-voltage load module 12 may work by using the electric energy stored by the low-voltage battery 16.

In some scenarios, a first conversion module and a second conversion module may be disposed in the OBC 11. The first conversion module may receive alternating current electric energy provided by an alternating current charging pile, and perform voltage regulation processing on a voltage of the alternating current electric energy. The second conversion module may receive alternating current electric energy obtained after the first conversion module performs the voltage regulation processing, and rectify the alternating current electric energy, to obtain direct current charging electric energy required by the power battery and charge the power battery.

During actual application, both the first conversion module and the second conversion module include a plurality of switching components, and working statuses of the first conversion module and the second conversion module may be implemented by adjusting working statuses of these components. To be specific, the OBC may include a controller, and the controller may provide a drive signal for the switching components, and adjust working statuses of the switching components by using the drive signal.

In an example, the OBC 11 may further include one or more auxiliary components, and these auxiliary components are configured to assist the controller in adjusting the working statuses of the switching components. For example, the auxiliary component may be a voltage sampling circuit, configured to detect a voltage output by a conversion module in the OBC. When the voltage output by the conversion module cannot meet a charging requirement, the controller may adjust the voltage output by the conversion module in the OBC by adjusting the working statuses of the switching components.

The OBC 11 may further include a high-voltage power distribution unit (power distribution unit, PDU), and the PDU may distribute and manage received electric energy. For example, the PDU may provide the received electric energy to the power battery, to charge the power battery.

The control module 17 may include any one of a vehicle control unit (vehicle control unit, VCU), a microcontroller unit (microcontroller unit, MCU), a general-purpose central processing unit (central processing unit, CPU), a general-purpose processor, digital signal processor (digital signal processor, DSP), an application-specific integrated circuit (application-specific integrated circuit, ASIC), a field programmable gate array (field programmable gate array, FPGA), and the like, or may be any one or a combination of another programmable logic device, a transistor logic device, and a hardware component. The control module 17 may control some or all of modules in the vehicle 10, for example, control the power battery module 13 to supply power to the power system 14.

The low-voltage battery 16 may be a secondary battery, and a rated voltage of the low-voltage battery 16 is less than a rated voltage of a high-voltage battery. The low-voltage battery 16 supplies power to a plurality of low-voltage load modules 12 in the vehicle. It should be understood that the low-voltage battery in this application is merely used to define a voltage amplitude less than a rated voltage of a high-voltage battery. For example, the rated voltage of the low-voltage battery may be but is not limited to 12 V, 24 V, or 48 V.

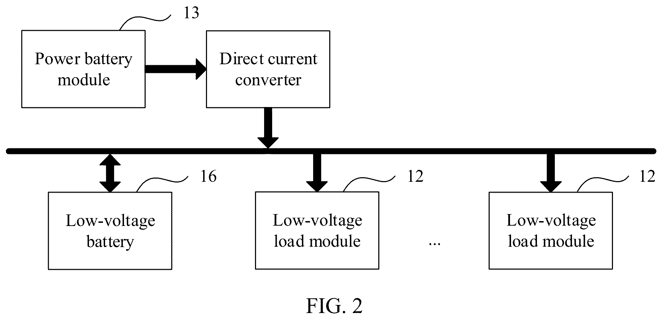

Most of the plurality of low-voltage load modules 12 in the vehicle 10 are functional loads. To implement normal running of the vehicle 10, electric energy stored by the low-voltage battery 16 needs to meet a power supply requirement of the vehicle 10. With reference to FIG. 2, in a running process of the vehicle 10, the power battery module 13 in the vehicle 10 may charge the low-voltage battery 16 and supply power to the low-voltage load module 12. When the vehicle 10 stops moving, the low-voltage load module 12 is mainly powered by the low-voltage battery 16. Because an energy storage capability of the low-voltage battery 16 is limited, the power battery module 13 needs to be regularly controlled to charge the low-voltage battery 16, to meet a power supply requirement of the low-voltage load module 12. When the vehicle 10 is in a parking gear, a charging pile charges the vehicle 10, or the vehicle 10 undergoes fault repair, the vehicle 10 stops moving.

During actual use, the rated voltage of the low-voltage load module 12 is far less than the rated voltage of the power battery in the power battery module 13. If the power battery is directly used to supply power to the low-voltage load module 12, it is difficult for a voltage output by the power battery to meet a power requirement of the low-voltage load module 12. Therefore, the vehicle may further include a direct current converter. With reference to FIG. 2, the direct current converter is connected between the power battery module 13 and the low-voltage battery 16, and is connected between the power battery module 13 and the low-voltage load module 12. Before the power battery supplies power to the low-voltage battery module 12, the direct current converter first adjusts the voltage output by the power battery, to output a power supply voltage that can be used by the low-voltage load module 13.

Currently, a common low-voltage battery charging manner is to set a fixed charging threshold. When a voltage or a state of charge of the low-voltage battery 16 is less than the charging threshold, the power battery module 13 is controlled to charge the low-voltage battery 16. However, when a load connected to the low-voltage battery 16 changes or internal data of the low-voltage battery 16 changes, the foregoing charging solution with the fixed charging threshold cannot meet a charging requirement of the low-voltage battery, and may cause an insufficient voltage of the low-voltage battery 16 or frequent charging of the low-voltage battery 16. This affects a service life of the low-voltage battery 16 or increases a charging loss of the vehicle 10, and affects normal running of the vehicle in a severe case.

In view of this, embodiments of this application provide a charging control method, apparatus, and system, and a vehicle, to comprehensively determine, based on load of a battery in an electric device, accuracy of a state of charge of a low-voltage battery, a condition of a load powered by the low-voltage battery, and the like, whether the battery needs to be charged, to meet charging requirements of the electric device in a plurality of scenarios and reduce a charging loss of the electric device.

The charging control method provided in embodiments of this application may be implemented by a control apparatus of the electric device. The control apparatus of the electric device may be an independent apparatus, may be a control chip or component in the electric device, or may be a software module. A product form and a deployment manner of the control apparatus of the electric device are not limited in embodiments of this application. For ease of understanding and description, the following describes a charging control solution in embodiments of this application by using an example in which the electric device is a vehicle and the control apparatus is a vehicle control unit (vehicle control unit, VCU) or a body control module (body control module, BCM).

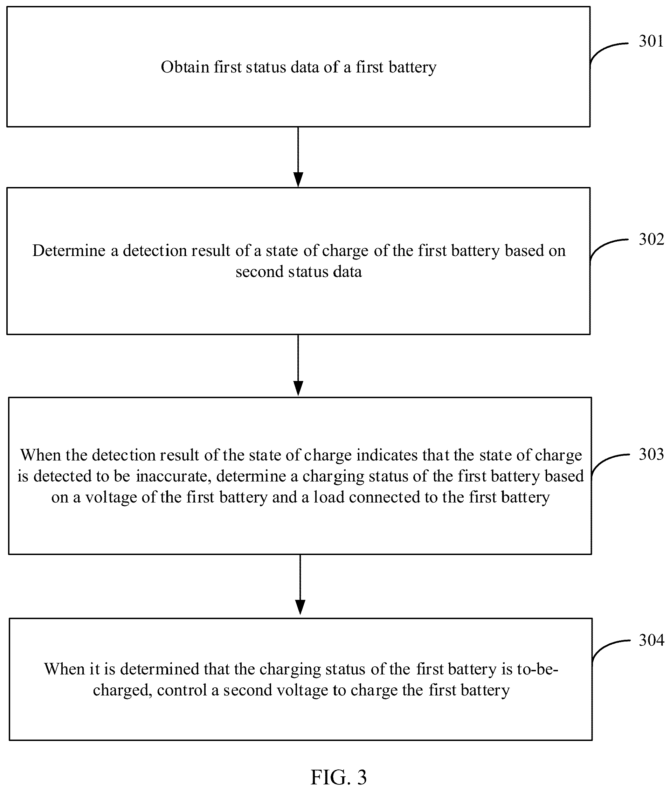

FIG. 3 is a schematic flowchart of a charging control method according to an embodiment of this application. With reference to FIG. 3, the charging control method may include the following steps.

S301: Obtain first status data of a first battery. The first status data includes a voltage of the first battery and an SOC of the first battery. The first battery is a low-voltage battery in the vehicle.

Specifically, the first status data may be obtained through interaction between a component for performing the charging control method and another component in the vehicle. For example, the VCU or the BCM may obtain a running parameter of the first battery by using a sensor system of the vehicle or a sensor system of the first battery, and keep monitoring a running status of the first battery and collecting data. A voltage sensor, a current sensor, a temperature sensor, and a battery sensor (electronic battery sensor, EBS) may alternatively be a combination of a plurality of sensors with different functions. A plurality of running parameters of the first battery are obtained by using the sensor system, and the running parameters may be but are not limited to a voltage, an SOC, a temperature, and the like.

In an example, if an entity for performing the charging control method, that is, the control apparatus, is in a wake-up state for a long time, the sensor system may directly send, to the control apparatus, the first status data indicating a running status of the first battery, so that a first controller 36 may perform charging detection.

In another example, to reduce a running loss of the electric device, the entity for performing the charging control method, that is, the control apparatus, may be in a sleep state. The sensor system may regularly perform detection and wake up the control apparatus, and output a detected first status to the control apparatus.

A detection time interval of the sensor system may be set based on an end time of a last charge of the first battery, a charging amount of the first battery, and a power supply condition of the first battery. For example, the charging amount of the first battery is 80%, and the power supply condition of the first battery is that 10% of a rated capacity is consumed per minute. The first status data may be detected 8 minutes before, and when the control apparatus determines that no charging is needed, the detection time interval is gradually reduced, to avoid an insufficient voltage of the first battery caused by missing a charging moment.

S302: Determine a detection result of a state of charge of the first battery based on second status data. The second status data includes historical status data.

The second status data may also be obtained by using the sensor system of the vehicle or the sensor system of the first battery.

During actual application, the second status data may include historical status data in a last charge or a plurality of previous charges of the first battery, and accuracy of the SOC may be detected based on a data parameter in the charging process of the first battery. The historical status data may include a first state of charge SOC1, a second state of charge SOC2, and a charging amount SOC3.

In an example, to obtain a latest detection result of the first battery, the accuracy of the SOC may be detected based on a historical status of the first battery in a last charge. Specifically, SOC1 is an SOC of the first battery before the last charge of the low-voltage battery, and SOC2 is an SOC of the first battery after the last charge of the first battery. When a difference between a sum SOC4 of SOC1 and SOC2 and SOC3 is less than or equal to a preset threshold, it is determined that the detection result of the SOC of the first battery is that the SOC is detected to be accurate. When the difference between the sum SOC4 of SOC1 and SOC2 and the second state of charge SOC3 is greater than the preset threshold, it is determined that the detection result of the SOC of the first battery is that the SOC is detected to be inaccurate. The preset threshold may be a detection delay and an allowed detection error of the SOC, and a specific value of the preset threshold may be set by an operator or may be obtained through calculation based on data in a plurality of charges and discharges of the first battery.

In another example, to avoid inaccuracy of a single detection, the accuracy of the SOC may be detected based on historical statuses of the first battery in a plurality of previous charges. The following calculation is performed on data before and after each charge. When a difference between a sum SOC4 of SOC1 and SOC2 and SOC3 is less than or equal to a preset threshold, it is determined that a current detection result of the SOC of the first battery is that the SOC is detected to be accurate. When the difference between the sum SOC4 of SOC1 and SOC2 and the second state of charge SOC3 is greater than the preset threshold, it is determined that the current detection result of the SOC of the first battery is that the SOC is detected to be inaccurate. The detection result of the accuracy of the SOC is determined based on a quantity of times the SOC is detected to be accurate. For example, a quantity of current detections is 4 and three detection results of the SOC are "accurate". In this case, it may be determined that the detection result of the SOC is that the SOC is accurate.

S303: When the detection result of the state of charge indicates that the state of charge is detected to be inaccurate, determine a charging status of the first battery based on the voltage of the first battery and a load connected to the first battery.

It should be understood that a voltage amplitude of the first battery is related to a load powered by the first battery. More loads powered by the first battery indicate a higher SOC consumption speed of the first battery, and correspondingly, a higher voltage amplitude decreasing speed of the first battery. Therefore, to avoid untimely charging or frequent charging caused by a change of the load powered by the first battery, different charging voltage thresholds may be set for the first battery based on the load connected to the low-voltage battery, and are used as charging determining conditions.

S304: When it is determined that the charging status of the first battery is to-be-charged, control a second battery to charge the first battery.

In an example, when the entity for performing the charging control method is the VCU, the method may be implemented through interaction between the VCU and a battery management system (battery management system, BMS). For example, the VCU sends a first signal to the BMS, where the first signal indicates the BMS to control the second battery to output stored electric energy to the first battery. The second battery may be a high-voltage battery of the vehicle.

In an example, when the entity for performing the charging control method is the BCM, the method may be implemented through interaction between the BCM and the VCU. For example, the BCM may send a charging request to the VCU, where the charging request indicates to charge the first battery. After the VCU receives the charging request, electric energy stored by the second battery may be output to the first battery through the BCM.

With reference to the foregoing descriptions, it can be learned that there are two charging detection processes for the charging control solution provided in embodiments of this application. A first one is a charging detection process in which a value of the SOC of the first battery is detected to be accurate, and a second one is a charging detection process in which the value of the SOC of the first battery is detected to be inaccurate. The following describes in detail two charging detection processes of the first controller 36 with reference to embodiments.

In an embodiment provided in this application, when the detection result of the SOC of the first battery indicates that the SOC of the first battery is detected to be inaccurate, the charging status of the first battery may be determined based on the voltage of the first battery and the load connected to the first battery, and when it is determined that the charging status of the first battery is to-be-charged, the second battery is controlled to charge the first battery.

It should be understood that the voltage amplitude of the first battery is related to the load powered by the first battery. More loads powered by the first battery indicate a higher capacity consumption speed of the first battery, and correspondingly, a higher voltage amplitude decreasing speed of the first battery. For example, an SOC decreasing speed of the first battery connected to a load with a rated power of 20 W is less than an SOC decreasing speed of the first battery connected to a load with a stable power of 40 W. Therefore, to avoid untimely charging or frequent charging caused by a change of the load powered by the first battery, different charging voltage thresholds may be set for the first battery based on the load connected to the first battery, and are used as charging determining conditions.

During actual application, load of the first battery is related to a status of the electric device, and the electric device may include a sleep state and a wake-up state. When the electric device is in the sleep state, a plurality of components in the electric device are also in a sleep state. Therefore, a quantity of loads powered by the first battery when the electric device is in the wake-up state is greater than a quantity of loads powered by the first battery when the electric device is in the sleep state, and different charging detection reference values may be configured for the first battery.

Specifically, the status of the electric device is detected, where the status of the electric device includes the sleep state or the wake-up state; and when it is determined that the electric device is in the sleep state, the charging status of the first battery is determined based on the voltage of the first battery and a first preset voltage threshold, where the first preset voltage threshold is a voltage drop generated by a load that runs when the electric device is in the sleep state; or when it is determined that the electric device is in the wake-up state, the charging status of the first battery is determined based on the voltage of the first battery and a second preset voltage threshold, where the second preset voltage threshold is a voltage drop generated by a load that runs when the electric device is in the wake-up state. Values of the first preset capacity threshold and the second preset capacity threshold may be configured based on status data in a plurality of charges and discharges of the low-voltage battery 31.

During actual application, when it is determined that the electric device is in the sleep state and the voltage of the first battery is less than the first preset voltage threshold, the electric device is controlled to enter the wake-up state, and it is determined that the charging status is to-be-charged; or when it is determined that the electric device is in the wake-up state and the voltage of the first battery is less than the second preset voltage threshold, it is determined that the charging status is to-be-charged.

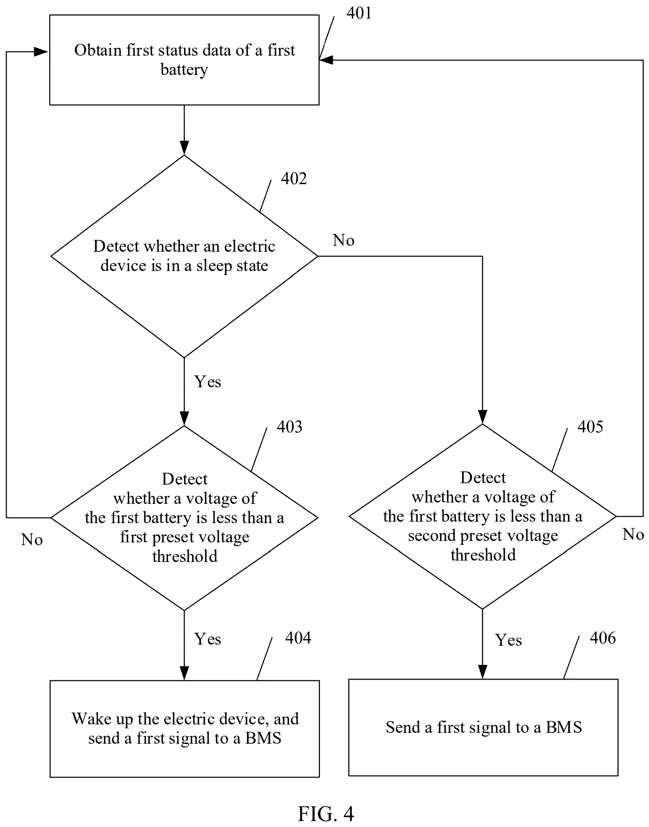

With reference to the foregoing descriptions, when the SOC of the first battery is detected to be inaccurate, if the entity for performing the charging control method is the VCU, for a charging detection process of the first battery, refer to FIG. 4. As shown in FIG. 4, the following steps are specifically included.

S401: Obtain the first status data of the first battery.

Specifically, the VCU may obtain the first status data of the first battery by using the sensor system of the electric device or the sensor system of the first battery. If the VCU is in a wake-up state for a long time, the sensor system may directly output the first status data to the VCU. If the VCU is in a sleep state, the sensor system regularly wakes up the VCU and outputs the first status data to the VCU.

S402: Detect whether the electric device is in the sleep state; and if the electric device is in the sleep state, perform S403, or if the electric device is not in the sleep state, perform S405.

S403: Detect whether the voltage of the first battery is less than the first preset voltage threshold; and if the voltage of the first battery is less than the first preset voltage threshold, perform S404, or the voltage of the first battery is not less than the first preset voltage threshold, return to S401.

S404: Wake up the electric device, and send the first signal to the BMS.

The first signal indicates the BMS to output, to the first battery through a voltage conversion component, the electric energy stored by the second battery, to charge the first battery.

S405: Detect whether the voltage of the first battery is less than the second preset voltage threshold; and if the voltage of the first battery is less than the second preset voltage threshold, perform S406, or if the voltage of the first battery is not less than the second preset voltage threshold, return to S401.

S406: Send the first signal to the BMS.

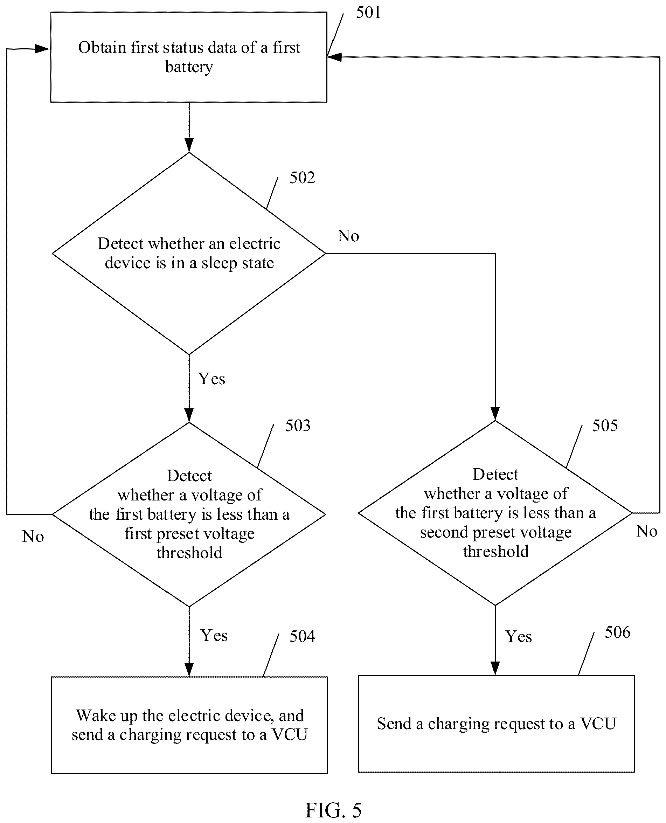

With reference to the foregoing descriptions, when the SOC of the first battery is detected to be inaccurate, if the entity for performing the charging control method is the BCM, for a charging detection process of the first battery, refer to FIG. 5. As shown in FIG. 5, the following steps are specifically included.

S501: Obtain the first status data of the first battery.

Specifically, the BCM may obtain the first status data of the first battery by using the sensor system of the first battery. If the BCM is in a wake-up state for a long time, the sensor system may directly output the first status data to the BCM. If the BCM is in a sleep state, the sensor system regularly wakes up the BCM and outputs the first status data to the BCM.

S502: Detect whether the electric device is in the sleep state; and if the electric device is in the sleep state, perform S503, or if the electric device is not in the sleep state, perform S505.

S503: Detect whether the voltage of the first battery is less than the first preset voltage threshold; and if the voltage of the first battery is less than the first preset voltage threshold, perform S504, or the voltage of the first battery is not less than the first preset voltage threshold, return to S501.

S504: Wake up the electric device, and send the charging request to the VCU.

The charging request is used to request to charge the first battery. After the VCU receives the charging request, the electric energy stored by the second battery may be output to the first battery through the BCM.

S505: Detect whether the voltage of the first battery is less than the second preset voltage threshold; and if the voltage of the first battery is less than the second preset voltage threshold, perform S506, or if the voltage of the first battery is not less than the second preset voltage threshold, return to S501.

S506: Send the charging request to the VCU.

In another embodiment provided in this application, when the detection result of the SOC of the first battery indicates that the value of the SOC is accurate, charging detection may be performed on the first battery and the charging status of the first battery may be determined based on an aging degree of the first battery and the value of the SOC in the first status data. When it is determined that the charging status is to-be-charged, the second battery is controlled to charge the first battery.

Specifically, a preset capacity threshold corresponding to the aging degree of the first battery is determined based on the aging degree of the first battery; and when the state of charge of the first battery is less than the preset capacity threshold, it is determined that the charging status is to-be-charged.

The aging degree indicates a capability of the first battery to store electric energy. In this application, a rated capacity of the first battery may be used to indicate the aging degree of the first battery. For example, if the aging degree is 85%, it indicates that a maximum value of an SOC of the first battery is 85% of the rated capacity of the first battery. With use of the first battery, a value of the aging degree of the first battery is gradually decreased, and the aging degree of the first battery is severer.

In an example, health detection may be regularly performed on the first battery, and the aging degree of the low-voltage battery is determined based on a health detection result.

In another example, the second battery may be regularly controlled to charge the first battery, and the aging degree of the first battery is determined by detecting an SOC of the first battery after charging is completed.

During actual application, as the value of the aging degree of the first battery is decreased, the maximum value of the SOC of the first battery is also decreased. To avoid frequent charging of the first battery caused by a change of the aging degree, different preset capacity thresholds may be set for different aging degrees of the first battery, and are used as charging determining conditions.

In an example, a table of a correspondence between an aging degree of the first battery and a preset capacity threshold may be set. The following uses an example in which the table of a correspondence between an aging degree and a preset capacity threshold includes two aging degree intervals. For example, a first aging degree interval of the first battery is (80%, 100%], a second aging degree interval of the first battery is [60%, 80%), a preset capacity threshold corresponding to the first aging degree interval is a first preset capacity threshold SOC1, and a preset capacity threshold corresponding to the second aging degree interval is a second preset capacity threshold SOC2.

When the SOC of the first battery is detected to be accurate, the following describes a charging detection process of the first battery by using an example in which the table of a correspondence between an aging degree and a preset capacity threshold includes the two aging degree intervals.

Specifically, if the aging degree of the first battery is within the first aging degree interval, the first preset capacity threshold SOC1 corresponding to the first aging degree interval is determined from the table of a correspondence between an aging degree and a preset capacity threshold. When it is detected that the SOC in the first status data is less than the first preset capacity threshold SOC1, it is determined that the charging status of the first battery is to-be-charged, and the second battery is controlled to charge the first battery. If the aging degree of the first battery is within the second aging degree interval, the second preset capacity threshold SOC2 corresponding to the second aging degree interval is determined from the table of a correspondence between an aging degree and a preset capacity threshold. When it is detected that the SOC in the first status data is less than the second preset capacity threshold SOC2, it is determined that the charging status of the first battery is to-be-charged, and the second battery is controlled to charge the first battery.

In a possible implementation, in a charging detection process of the first battery, the first battery continues to supply power to a load. This causes an actual value of an SOC of the first battery to be continuously decreased, resulting in a detection delay between the value of the SOC in the first status data and the actual value of the SOC of the first battery. To ensure accuracy of a detection result, the voltage amplitude of the first battery may be used to compensate for the detection delay in the value of the SOC. To be specific, the control apparatus performs charging detection on the first battery based on an aging degree of the first battery, the value of the SOC, and the voltage amplitude of the first battery.

During actual use, a capacity loss of the first battery is mainly related to a load powered by the first battery. When the voltage amplitude of the first battery is used to compensate for the detection delay, a voltage compensation value of the first battery may be set based on the load powered by the first battery, to ensure the accuracy of the detection result.

Specifically, a preset capacity threshold corresponding to the aging degree of the first battery is determined based on the aging degree of the first battery; and if the electric device is in the sleep state, when it is detected that the state of charge is less than the preset capacity threshold and the voltage of the first battery is less than a third preset voltage threshold, it is determined that the charging status is to-be-charged, where the third preset voltage threshold is a voltage drop generated by a load that runs when the electric device is in the sleep state; or if the electric device is in the wake-up state, when it is detected that the state of charge is less than the preset capacity threshold and the voltage of the first battery is less than a fourth preset voltage threshold, it is determined that the charging status is to-be-charged, where the fourth preset voltage threshold is a voltage drop generated by a load that runs when the electric device is in the wake-up state.

Specifically, the preset capacity threshold corresponding to the current aging degree of the first battery is detected. If the aging degree of the first battery is within the first aging degree interval in the table of a correspondence between an aging degree and a preset capacity threshold, the aging degree corresponds to the first preset capacity threshold SOC1. If the electric device is in the sleep state, when it is detected that the SOC is less than SOC1 and the voltage of the first battery is less than the third preset voltage threshold, it is determined that the charging status is to-be-charged; or if the electric device is in the wake-up state, when it is detected that the SOC is less than the preset capacity threshold and the voltage of the first battery is less than the fourth preset voltage threshold, it is determined that the charging status of the first battery is to-be-charged. The third preset voltage threshold is the voltage drop generated by the load that runs when the vehicle is in the sleep state, and the fourth preset voltage threshold is the voltage drop generated by the load that runs when the vehicle is in the wake-up state.

Specifically, the preset capacity threshold corresponding to the current aging degree of the first battery is detected. If the aging degree of the first battery is within the second aging degree interval in the table of a correspondence between an aging degree and a preset capacity threshold, the aging degree corresponds to the second preset capacity threshold SOC2. If the electric device is in the sleep state, when it is detected that the SOC of the first battery is less than SOC2 and the voltage of the first battery is less than the third preset voltage threshold, it is determined that the charging status of the first battery is to-be-charged; or if the electric device is in the wake-up state, when it is detected that the SOC of the first battery is less than SOC2 and the voltage of the first battery is less than the fourth preset voltage threshold, it is determined that the charging status of the first battery is to-be-charged.

It should be understood that, in the foregoing embodiments of this application, loads powered by the first battery are distinguished based on the status of the electric device, and corresponding preset voltage thresholds are configured as delay compensation. During actual application, two or more preset voltage thresholds may be configured based on a rated voltage and a rated power of an actual load powered by the first battery. This is not specifically limited in this application.

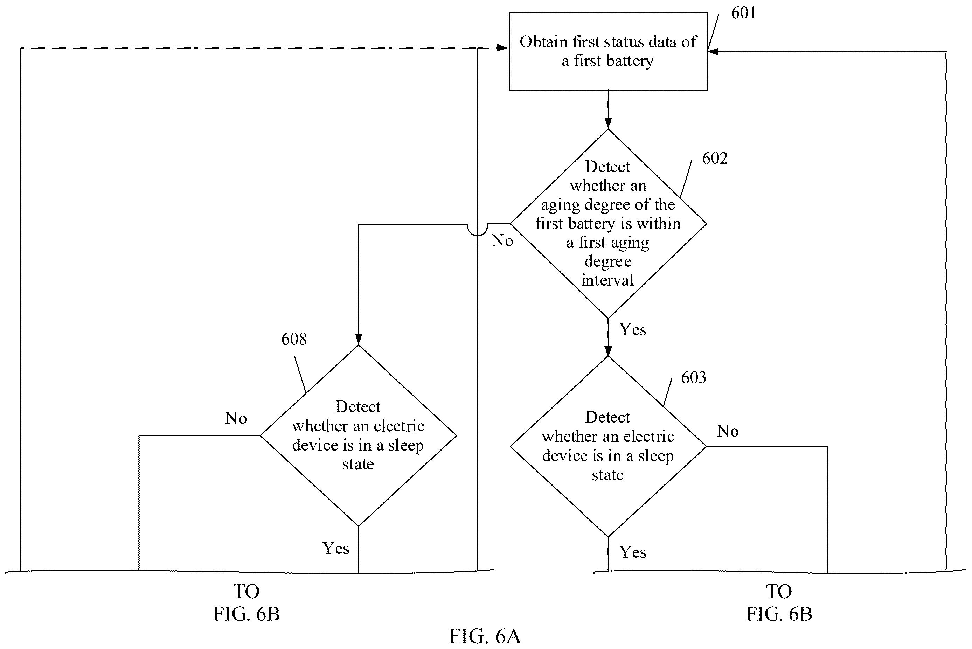

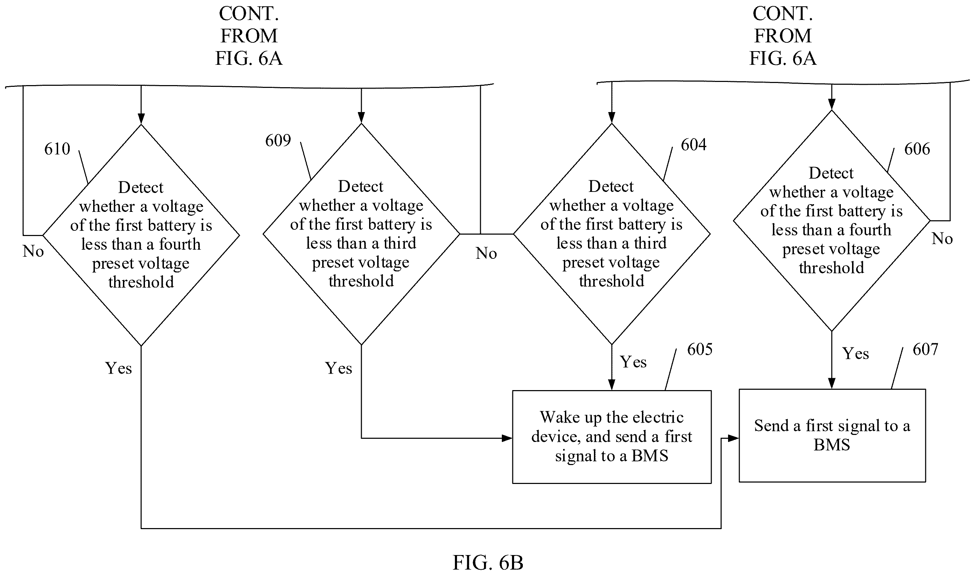

With reference to the foregoing descriptions, when the SOC of the first battery is detected to be accurate, if the entity for performing the charging control prevention is the VCU, for a charging detection process of the first battery, refer to FIG. 6A and FIG. 6B. As shown in FIG. 6A and FIG. 6B, the following steps are specifically included.

S601: Obtain the first status data of the first battery.

S602: Detect whether the aging degree of the first battery is within the first aging degree interval; and if the aging degree of the first battery is within the first aging degree interval, perform S603, or if the aging degree of the first battery is not within the first aging degree interval, perform S608.

S603: Detect whether the electric device is in the sleep state; and if the electric device is in the sleep state, perform S604, or if the electric device is not in the sleep state, perform S606.

S604: Detect whether the voltage of the first battery is less than the third preset voltage threshold; and if the voltage of the first battery is less than the third preset voltage threshold, perform S605, or if the voltage of the first battery is not less than the third preset voltage threshold, return to S601.

S605: Wake up the electric device, and send the first signal to the BMS.

S606: Detect whether the voltage of the first battery is less than the fourth preset voltage threshold; and if the voltage of the first battery is less than the fourth preset voltage threshold, perform S607, or if the voltage of the first battery is not less than the fourth preset voltage threshold, return to S601.

S607: Send the first signal to the BMS.

S608: Detect whether the electric device is in the sleep state; and if the electric device is in the sleep state, perform S609, or if the electric device is not in the sleep state, perform S610.

S609: Detect whether the voltage of the first battery is less than the third preset voltage threshold; and if the voltage of the first battery is less than the third preset voltage threshold, perform S605, or if the voltage of the first battery is not less than the third preset voltage threshold, return to S601.

S610: Detect whether the voltage of the first battery is less than the fourth preset voltage threshold; and if the voltage of the first battery is less than the fourth preset voltage threshold, perform S607, or if the voltage of the first battery is not less than the fourth preset voltage threshold, return to S601.

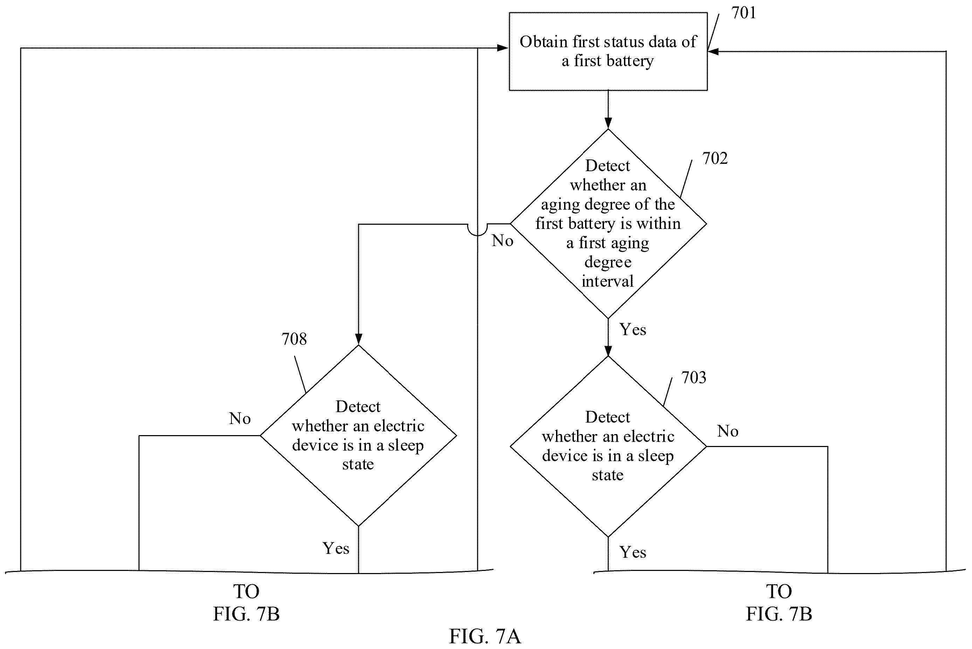

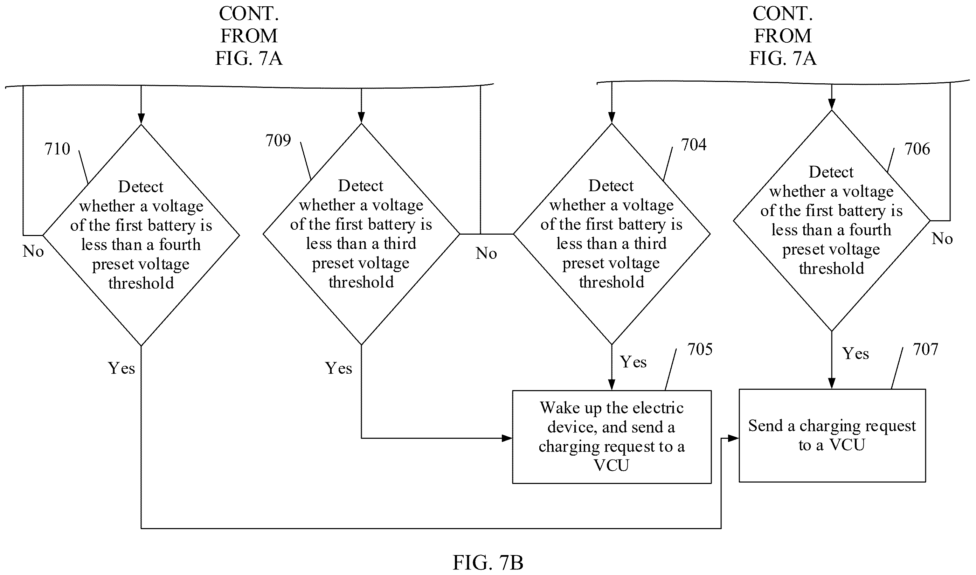

With reference to the foregoing descriptions, when the SOC of the first battery is detected to be accurate, if the entity for performing the charging control prevention is the BCM, for a charging detection process of the first battery, refer to FIG. 7A and FIG. 7B. As shown in FIG. 7A and FIG. 7B, the following steps are specifically included.

S701: Obtain the first status data of the first battery.

S702: Detect whether the aging degree of the first battery is within the first aging degree interval; and if the aging degree of the first battery is within the first aging degree interval, perform S703, or if the aging degree of the first battery is not within the first aging degree interval, perform S708.

S703: Detect whether the electric device is in the sleep state; and if the electric device is in the sleep state, perform S704, or if the electric device is not in the sleep state, perform S706.

S704: Detect whether the voltage of the first battery is less than the third preset voltage threshold; and if the voltage of the first battery is less than the third preset voltage threshold, perform S705, or if the voltage of the first battery is not less than the third preset voltage threshold, return to S701.

S705: Wake up the electric device, and send the charging request to the VCU.

S706: Detect whether the voltage of the first battery is less than the fourth preset voltage threshold; and if the voltage of the first battery is less than the fourth preset voltage threshold, perform S707, or if the voltage of the first battery is not less than the fourth preset voltage threshold, return to S701.

S707: Send the charging request to the VCU.

S708: Detect whether the electric device is in the sleep state; and if the electric device is in the sleep state, perform S709, or if the electric device is not in the sleep state, perform S710.

S709: Detect whether the voltage of the first battery is less than the third preset voltage threshold; and if the voltage of the first battery is less than the third preset voltage threshold, perform S705, or if the voltage of the first battery is not less than the third preset voltage threshold, return to S701.

S710: Detect whether the voltage of the first battery is less than the fourth preset voltage threshold; and if the voltage of the first battery is less than the fourth preset voltage threshold, perform S707, or if the voltage of the first battery is not less than the fourth preset voltage threshold, return to S701.

An embodiment of this application further provides a charging control apparatus. The vehicle control apparatus may be configured to perform the foregoing method embodiments. For related features, refer to the foregoing method embodiments. Details are not described herein again.

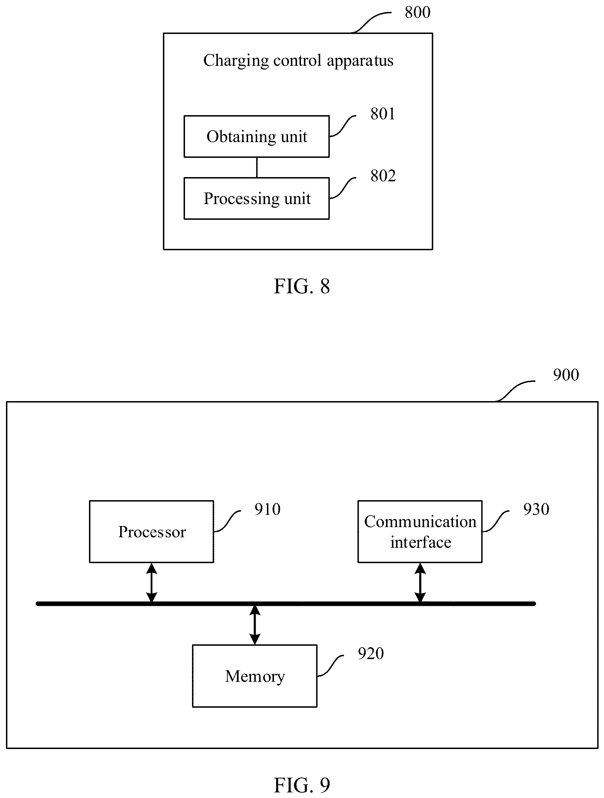

As shown in FIG. 8, in an example, the charging control apparatus may include: an obtaining unit 801, configured to obtain first status data of a first battery, where the first status data includes a voltage of the first battery; and a processing unit 802, configured to: determine a detection result of a state of charge of the first battery based on second status data, where the second status data includes historical status data; when the detection result of the state of charge indicates that the state of charge is detected to be inaccurate, determine a charging status of the first battery based on the voltage of the first battery and a load connected to the first battery; and when it is determined that the charging status of the first battery is to-be-charged, control a second battery to charge the first battery.

In a possible implementation, the processing unit 802 is specifically configured to: detect a status of an electric device, where the status of the electric device includes a sleep state or a wake-up state; and when it is determined that the electric device is in the sleep state, determine the charging status of the first battery based on the voltage of the first battery and a first preset voltage threshold, where the first preset voltage threshold is a voltage drop generated by a load that runs when the electric device is in the sleep state; or when it is determined that the electric device is in the wake-up state, determine the charging status of the first battery based on the voltage of the first battery and a second preset voltage threshold, where the second preset voltage threshold is a voltage drop generated by a load that runs when the electric device is in the wake-up state.

In a possible implementation, the processing unit 802 is specifically configured to: when it is determined that the electric device is in the sleep state and the voltage of the first battery is less than the first preset voltage threshold, control the electric device to enter the wake-up state, and determine that the charging status is to-be-charged; or when it is determined that the electric device is in the wake-up state and the voltage of the first battery is less than the second preset voltage threshold, determine that the charging status is to-be-charged.

In a possible implementation, the processing unit 802 is further configured to: when the detection result of the state of charge indicates that the state of charge is detected to be accurate, determine the charging status of the first battery based on the state of charge and an aging degree of the first battery, where the aging degree indicates a capability of the first battery to store electric energy.

In a possible implementation, the processing unit 802 is specifically configured to: determine, based on the aging degree of the first battery, a preset capacity threshold corresponding to the aging degree of the first battery; and when the state of charge of the first battery is less than the preset capacity threshold, determine that the charging status is to-be-charged.

In a possible implementation, the processing unit 802 is further configured to: when the detection result of the state of charge indicates that the state of charge is detected to be accurate, determine the charging status of the first battery based on an aging degree of the first battery, the state of charge, and the voltage of the first battery.

In a possible implementation, the processing unit 802 is specifically configured to: determine, based on the aging degree of the first battery, a preset capacity threshold corresponding to the aging degree of the first battery; and if the electric device is in a sleep state, when it is detected that the state of charge is less than the preset capacity threshold and the voltage of the first battery is less than a third preset voltage threshold, determine that the charging status is to-be-charged, where the third preset voltage threshold is a voltage drop generated by a load that runs when the electric device is in the sleep state; or if the electric device is in a wake-up state, when it is detected that the state of charge is less than the preset capacity threshold and the voltage of the first battery is less than a fourth preset voltage threshold, determine that the charging status is to-be-charged, where the fourth preset voltage threshold is a voltage drop generated by a load that runs when the electric device is in the wake-up state.

In a possible implementation, the processing unit 802 is specifically configured to: obtain a first state of charge, a second state of charge, and a charging amount in the second status data, where the first state of charge is a state of charge of the first battery before a last charge, and the second state of charge is a state of charge of the first battery after the last charge; and when a difference between a sum of the first state of charge and the charging amount and the second state of charge is less than or equal to a preset threshold, determine that the detection result of the state of charge indicates that the state of charge is detected to be accurate; or when the difference between the sum of the first state of charge and the charging amount and the second state of charge is greater than the preset threshold, determine that the detection result of the state of charge indicates that the state of charge is detected to be inaccurate.

In a possible implementation, the processing unit 802 is specifically configured to send a charging request to a controller, where the charging request indicates the controller to control the second battery to charge the first battery.

In a possible implementation, the processing unit 802 is specifically configured to send a first signal to a battery management system in the electric device, where the first signal indicates the battery management system to control the second battery to charge the first battery.

For a specific implementation, refer to the method steps implemented by the vehicle control apparatus in the foregoing method embodiments. Details are not described herein again.

It should be understood that division into units in the foregoing apparatus is merely logical function division. During actual implementation, all or some of the units may be integrated into one physical entity, or may be physically separated. In addition, the units in the apparatus may be implemented in a form of invoking software by a processor. For example, the apparatus includes the processor. The processor is connected to a memory. The memory stores instructions. The processor invokes the instructions stored in the memory, to implement any one of the foregoing methods or implement a function of each unit in the apparatus. For example, the processor is a general-purpose processor, such as a central processing unit (Central Processing Unit, CPU) or a microprocessor. The memory is a memory inside the apparatus or a memory outside the apparatus. Alternatively, the units in the apparatus may be implemented in a form of hardware circuit, and functions of some or all of the units may be implemented by designing the hardware circuit. The hardware circuit may be understood as one or more processors. For example, in an implementation, the hardware circuit is an application-specific integrated circuit (application-specific integrated circuit, ASIC), and the functions of some or all of the units are implemented by designing a logical relationship between elements in the circuit. For another example, in another implementation, the hardware circuit may be implemented by a programmable logic device (programmable logic device, PLD). A field programmable gate array (Field Programmable Gate Array, FPGA) is used as an example. The field programmable gate array may include a large quantity of logic gate circuits. A configuration file is used to configure a connection relationship between the logic gate circuits, to implement the functions of some or all of the units. All units in the foregoing apparatus may be implemented in a form of invoking software by a processor, or all units may be implemented in a form of hardware circuit, or some units may be implemented in a form of invoking software by a processor, and remaining units may be implemented in a form of hardware circuit.

In embodiments of this application, the processor is a circuit that has a signal processing capability. In an implementation, the processor may be a circuit that has an instruction reading and running capability, for example, a CPU, a microprocessor, a graphics processing unit (graphics processing unit, GPU) (which may be understood as a microprocessor), or a digital signal processor (digital signal processor, DSP). In another implementation, the processor may implement a specific function by using a logical relationship of a hardware circuit. The logical relationship of the hardware circuit is fixed or reconfigurable. For example, the processor is a hardware circuit, for example, an FPGA, implemented by an ASIC or a PLD. In the reconfigurable hardware circuit, a process in which the processor loads a configuration document to implement a hardware circuit configuration may be understood as a process in which the processor loads instructions to implement functions of some or all of the foregoing units. In addition, the processor may alternatively be a hardware circuit designed for artificial intelligence, and may be understood as an ASIC, for example, a neural network processing unit (Neural Network Processing Unit, NPU), a tensor processing unit (Tensor Processing Unit, TPU), or a deep learning processing unit (Deep Learning Processing Unit, DPU).

It can be learned that each unit in the foregoing apparatus may be one or more processors (or processing circuits) configured to implement the foregoing method, for example, a CPU, a GPU, an NPU, a TPU, a DPU, a microprocessor, a DSP, an ASIC, or an FPGA, or a combination of at least two of these processor forms.

In addition, all or some of the units in the apparatus may be integrated, or may be implemented independently. In an implementation, the units are integrated together and implemented in a form of system-on-a-chip (system-on-a-chip, SoC). The SoC may include at least one processor, configured to implement any one of the foregoing methods or implement a function of each unit in the apparatus. The at least one processor may have different types, for example, includes a CPU and an FPGA, a CPU and an artificial intelligence processor, a CPU and a GPU, or the like.

In a simple embodiment, a person skilled in the art may figure out that the charging control apparatus in the foregoing embodiment may be in a form shown in FIG. 9.

An apparatus 900 shown in FIG. 9 includes at least one processor 910 and a communication interface 930. In an optional design, a memory 920 may be further included.

In this embodiment of this application, a specific connection medium between the processor 910 and the memory 920 is not limited.

In the apparatus shown in FIG. 9, when communicating with another device, the processor 910 may perform data transmission through the communication interface 930.

When the charging control apparatus is in the form shown in FIG. 9, the processor 910 in FIG. 9 may invoke computer-executable instructions stored in the memory 920, to enable the apparatus 900 to perform any one of the foregoing method embodiments.

An embodiment of this application further relates to a charging control system. The charging control system may include a first battery and a controller. The controller may perform the method according to any one of the foregoing embodiments.

An embodiment of this application further relates to a vehicle. The vehicle includes a first battery and the foregoing charging control apparatus. The charging control apparatus may perform the method according to any one of the foregoing embodiments.

In a possible implementation, an embodiment of this application provides a computer-readable storage medium. The computer-readable storage medium stores program code. When the program code is run on a computer, the computer is enabled to perform the foregoing method embodiments.

In a possible implementation, an embodiment of this application provides a computer program product. When the computer program product runs on a computer, the computer is enabled to perform the foregoing method embodiments.

Therefore, this application may use a form of hardware only embodiments, software only embodiments, or embodiments with a combination of software and hardware. In addition, this application may use a form of computer program product that is implemented on one or more computer-usable storage media (including but not limited to a magnetic disk memory, a CD-ROM, an optical memory, and the like) that include computer-usable program code.

The computer program instructions may alternatively be stored in a computer-readable memory that can indicate a computer or another programmable data processing device to work in a specific manner, so that the instructions stored in the computer-readable memory generate an artifact that includes an instruction apparatus. The instruction apparatus implements a specified function in one or more procedures in the flowcharts and/or in one or more blocks in the block diagrams.

The computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specified function in one or more procedures in the flowcharts and/or in one or more blocks in the block diagrams.

It is clear that a person skilled in the art can make various modifications and variations to embodiments of this application without departing from the scope of embodiments of this application. In this case, this application is intended to cover these modifications and variations of embodiments of this application provided that they fall within the scope of the claims of this application and their equivalent technologies. In embodiments of this application, unless otherwise stated or there is a logic conflict, terms and/or descriptions in embodiments are consistent and may be mutually referenced, and technical features in different embodiments may be combined based on an internal logical relationship thereof, to form a new embodiment.

## Claims

1. A charging control method, applied to an electric device, wherein the method comprises:
obtaining first status data of a first battery, wherein the first status data comprises a voltage of the first battery;
determining a detection result of a state of charge of the first battery based on second status data, wherein the second status data comprises historical status data;
when the detection result of the state of charge indicates that the state of charge is detected to be inaccurate, determining a charging status of the first battery based on the voltage of the first battery and a load connected to the first battery; and
when it is determined that the charging status of the first battery is to-be-charged, controlling a second battery to charge the first battery.

2. The method according to claim 1, wherein determining the charging status of the first battery based on the voltage of the first battery and the load connected to the first battery comprises:
detecting a status of the electric device, wherein the status of the electric device comprises a sleep state or a wake-up state; and
when it is determined that the electric device is in the sleep state, determining the charging status of the first battery based on the voltage of the first battery and a first preset voltage threshold, wherein the first preset voltage threshold is a voltage drop generated by a load that runs when the electric device is in the sleep state; or
when it is determined that the electric device is in the wake-up state, determining the charging status of the first battery based on the voltage of the first battery and a second preset voltage threshold, wherein the second preset voltage threshold is a voltage drop generated by a load that runs when the electric device is in the wake-up state.

3. The method according to claim 2, wherein determining the charging status of the first battery based on the voltage of the first voltage and the load connected to the first battery comprises:
when it is determined that the electric device is in the sleep state and the voltage of the first battery is less than the first preset voltage threshold, controlling the electric device to enter the wake-up state, and determining that the charging status is to-be-charged; or
when it is determined that the electric device is in the wake-up state and the voltage of the first battery is less than the second preset voltage threshold, determining that the charging status is to-be-charged.

4. The method according to any one of claims 1 to 3, wherein the method further comprises:
when the detection result of the state of charge indicates that the state of charge is detected to be accurate, determining the charging status of the first battery based on the state of charge and an aging degree of the first battery, wherein the aging degree indicates a capability of the first battery to store electric energy.

5. The method according to claim 4, wherein determining the charging status of the first battery based on the state of charge and the aging degree of the first battery comprises:
determining, based on the aging degree of the first battery, a preset capacity threshold corresponding to the aging degree of the first battery; and
when the state of charge of the first battery is less than the preset capacity threshold, determining that the charging status is to-be-charged.

6. The method according to claim 1, wherein the method further comprises:
when the detection result of the state of charge indicates that the state of charge is detected to be accurate, determining the charging status of the first battery based on an aging degree of the first battery, the state of charge, and the voltage of the first battery.

7. The method according to claim 6, wherein determining the charging status of the first battery based on the aging degree of the first battery, the state of charge, and the voltage of the first battery comprises:
determining, based on the aging degree of the first battery, a preset capacity threshold corresponding to the aging degree of the first battery; and
if the electric device is in a sleep state, when it is detected that the state of charge is less than the preset capacity threshold and the voltage of the first battery is less than a third preset voltage threshold, determining that the charging status is to-be-charged, wherein the third preset voltage threshold is a voltage drop generated by a load that runs when the electric device is in the sleep state; or
if the electric device is in a wake-up state, when it is detected that the state of charge is less than the preset capacity threshold and the voltage of the first battery is less than a fourth preset voltage threshold, determining that the charging status is to-be-charged, wherein the fourth preset voltage threshold is a voltage drop generated by a load that runs when the electric device is in the wake-up state.

8. The method according to any one of claims 1 to 7, wherein determining the detection result of the state of charge of the first battery based on the second status data comprises:
obtaining a first state of charge, a second state of charge, and a charging amount in the second status data, wherein the first state of charge is a state of charge of the first battery before a last charge, and the second state of charge is a state of charge of the first battery after the last charge; and
when a difference between a sum of the first state of charge and the charging amount and the second state of charge is less than or equal to a preset threshold, determining that the detection result of the state of charge indicates that the state of charge is detected to be accurate; or
when the difference between the sum of the first state of charge and the charging amount and the second state of charge is greater than the preset threshold, determining that the detection result of the state of charge indicates that the state of charge is detected to be inaccurate.

9. The method according to any one of claims 1 to 8, wherein controlling the second battery to charge the first battery comprises:
sending a charging request to a controller, wherein the charging request indicates the controller to control the second battery to charge the first battery.

10. The method according to any one of claims 1 to 8, wherein controlling the second battery to charge the first battery comprises:
sending a first signal to a battery management system in the electric device, wherein the first signal indicates the battery management system to control the second battery to charge the first battery.

11. A charging control apparatus, comprising at least one processor, wherein the at least one processor is coupled to at least one memory, and the at least one processor is configured to execute a computer program or instructions stored in the at least one memory, to enable the apparatus to perform the method according to any one of claims 1 to 10.

12. A charging control system, comprising a first battery and a controller, wherein the first controller is configured to perform the method according to any one of claims 1 to 10.

13. A vehicle, comprising a first battery and the charging control apparatus according to claim 11.

14. A computer-readable storage medium, comprising a computer program or instructions, wherein when a computer reads and executes the computer program or the instructions, the computer is enabled to perform the method according to any one of claims 1 to 10.

15. A computer storage product, wherein when the computer program product runs on a computer, the computer is enabled to perform the method according to any one of claims 1 to 10.
